# DEMANDE DE BREVET EUROPEEN

(11) **EP 3 739 076 A1**
(43) Date de publication de la demande: **18.11.2020**
(21) Numéro de dépôt: 19174979.5
(22) Date de dépôt: 16.05.2019
(51) Int. Cl.: C22C 38/02, B22F 3/24, C22C 33/02, C22C 38/20, C22C 38/22, C22C 38/38

(54) **COMPOSITION DE POUDRE D'ACIER INOXYDABLE AUSTENITIQUE SANS NICKEL ET PIECE REALISEE PAR FRITTAGE AU MOYEN DE CETTE POUDRE**

(71) Demandeur: The Swatch Group Research and Development Ltd, 2074 Marin (CH)
(72) Inventeur: PORRET, Joël, Marin-Epagnier 2074 (CH); GILLER, Ludovic, 1723 Marly (CH)
(74) Mandataire: ICB SA

(57) **Abrégé**

La présente invention concerne une poudre d'acier inoxydable austénitique ayant une teneur en nickel inférieure ou égale à 0.5% en poids et une teneur en carbone spécifique qui est supérieure ou égale à 0.05% et inférieure ou égale à 0.11% en poids. Elle se rapporte également au procédé de fabrication par métallurgie des poudres de cette poudre et à la pièce (3) issue du procédé de fabrication ayant pour caractéristique de présenter une couche désoxydée (1) en surface de la pièce (3) s'étendant sur une épaisseur e supérieure ou égale à 200 µm.

## Description

### Domaine de l'invention

L'invention concerne une composition de poudre d'acier inoxydable austénitique sans nickel. Elle se rapporte également à une pièce, en particulier une pièce d'habillage en horlogerie, réalisée par frittage au moyen de cette poudre ainsi qu'au procédé de fabrication par frittage.

### Arrière-plan de l'invention

Le frittage de poudres en acier inoxydable est aujourd'hui très répandu. Il peut être notamment réalisé sur des ébauches obtenues par injection (Metal Injection Moulding), extrusion, pressage ou autre fabrication additive. De façon la plus traditionnelle, le frittage des aciers inoxydables austénitiques consiste à consolider et densifier une poudre d'un tel acier dans un four à haute température (1200-1400°C), sous vide ou sous atmosphère protectrice gazeuse. Les propriétés des pièces après frittage (densité, propriétés mécaniques et magnétiques, résistance à la corrosion, etc.) pour une composition de poudre donnée dépendent fortement du cycle de frittage utilisé. Les paramètres suivants sont particulièrement importants : vitesse de chauffe, température et temps de frittage, atmosphère de frittage (gaz, flux de gaz, pression) et vitesse de refroidissement.

Pour les domaines comme l'horlogerie où l'esthétique est particulièrement importante, deux caractéristiques de la microstructure après frittage sont particulièrement importantes, à savoir la densité et la présence d'inclusions. La présence de porosités ou d'inclusions non métalliques, notamment des oxydes, est en effet très néfaste pour le rendu après polissage. Pour obtenir une pièce polie présentant un éclat et une couleur similaires aux aciers inoxydables corroyés, il faut donc viser une densité proche de 100% et un minimum d'inclusions non métalliques.

En ce qui concerne la densité, on connaît des solutions pour éliminer toute porosité, du moins en surface, dans les pièces en aciers inoxydables austénitiques sans nickel mises en forme par métallurgie des poudres. Ces solutions consistent entre autres à réaliser une compression isostatique à chaud (HIP pour Hot Isostatic Pressing) sur des pièces frittées dont la porosité est fermée.

Concernant les oxydes, c'est principalement la concentration élevée en manganèse dans les aciers inoxydables austénitiques sans nickel qui est problématique pour une mise en forme par métallurgie des poudres. En effet, la grande affinité de cet élément avec l'oxygène, couplée à la surface spécifique élevée des poudres, nécessite une grande maîtrise des processus qui sont réalisés à haute température :
- il faut tout d'abord utiliser une poudre dont la surface des particules est la moins oxydée possible ;
- il faut ensuite également minimiser l'oxydation de la poudre lors du chauffage des pièces jusqu'à la température de frittage en utilisant une atmosphère très réductrice. Cependant, pour des aciers inoxydables austénitiques dans la composition desquels on introduit de l'azote afin de s'affranchir de l'utilisation de nickel, l'atmosphère de frittage doit nécessairement comporter de l'azote, avec pour conséquence qu'il n'est pas possible de travailler avec une atmosphère ne contenant que des agents réducteurs ;
- finalement, il est nécessaire de réduire les oxydes les plus stables à haute température et d'éliminer les produits de réduction avant fermeture de la porosité. C'est le point le plus critique car, au cours des opérations de frittage, la réduction des oxydes de manganèse s'effectue en même temps que la fermeture des pores, à une température généralement supérieure à 1200°C. Par conséquent, on obtient typiquement des pièces avec une couche bien désoxydée en surface et de nombreuses inclusions (oxydes) à coeur. En effet, à la surface des pièces, l'atmosphère du four est plus facilement renouvelée et les produits de réduction peuvent être transportés dans tout le volume du four lorsque, en début de frittage, la porosité est encore ouverte. A coeur par contre, l'atmosphère n'est pas renouvelée et les conditions ne permettent pas une réduction totale des oxydes avant fermeture de la porosité. Pour les aciers inoxydables austénitiques sans nickel, il est ainsi très difficile d'avoir une couche désoxydée dont l'épaisseur soit supérieure à 200 µm. Comme la terminaison des pièces (usinage, polissage) après frittage nécessite un enlèvement de matière qui peut être supérieur à 200 µm, des oxydes peuvent être présents à la surface des pièces terminées, ce qui est néfaste à la fois du point de vue esthétique et du point de vue de la résistance à la corrosion pour les surfaces polies.

Il existe donc un besoin d'augmenter l'épaisseur de cette couche désoxydée pour les pièces mises en forme par frittage de poudres d'aciers inoxydables austénitiques sans nickel.

### Résumé de l'invention

La présente invention a pour objet de proposer une composition de poudre d'acier inoxydable austénitique sans nickel permettant d'obtenir, après frittage, une couche désoxydée particulièrement profonde, à savoir supérieure ou égale à 200 µm.

On entend par couche désoxydée une couche présentant des oxydes de faible taille finement dispersés. Préférentiellement, le diamètre des oxydes est inférieur à 2 µm et la fraction surfacique de ces oxydes est inférieure à 0.1% dans cette couche. Ces oxydes finement dispersés n'ont pas d'impact au niveau esthétique après polissage. En dehors de cette couche désoxydée, le diamètre des oxydes peut typiquement atteindre 5 µm et la fraction surfacique des oxydes peut aller jusqu'à 1%.

Pour obtenir cette couche désoxydée de plus grande épaisseur, il est nécessaire de sélectionner une poudre d'acier inoxydable austénitique sans nickel ayant une concentration massique en carbone supérieure ou égale à 0.05% et inférieure ou égale à 0.11%. Le carbone permet en effet une réduction des oxydes les plus stables, particulièrement les oxydes de manganèse et les oxydes mixtes de manganèse et de silicium, à une température qui peut être inférieure ou égale à 1200°C. Etant donné qu'en dessous de 1200°C, la densification est faible et la porosité reste ouverte, la présence de carbone permet de désoxyder plus en profondeur, l'élimination des produits de réduction et le renouvellement de l'atmosphère à l'intérieur de la pièce étant favorisés. Cette réduction des oxydes par le carbone à haute température est communément appelée réduction carbothermique et répond, par exemple pour un oxyde de manganèse, à la réaction suivante :

MnO + C → Mn + CO.

Il a été montré lors de plusieurs essais de frittage réalisés sur des poudres d'aciers inoxydables austénitiques sans nickel que la concentration en carbone doit être choisie dans la gamme spécifique 0.05-0.11% en poids. Cette concentration optimale permet d'obtenir une couche désoxydée la plus épaisse possible, tout en évitant une décarburation problématique des pièces. En effet, lorsque la concentration massique en carbone est inférieure à 0.05% en poids, la réduction carbothermique n'est pas complète et la couche désoxydée est réduite. A l'opposé, une concentration trop élevée en carbone est problématique car la décarburation provenant de la réaction avec l'hydrogène présent dans l'atmosphère de frittage ne peut pas être maîtrisée et de grosses variations de concentration en carbone entre les pièces sont observées. Avec des concentrations massiques en carbone dans la poudre d'acier inoxydable austénitique sans nickel comprises entre 0.05 et 0.11%, les éventuelles variations de concentration en carbone sont suffisamment faibles pour ne pas influencer la microstructure et les propriétés mécaniques et physiques des pièces après frittage.

### Brève description des figures

D'autres caractéristiques et avantages de la présente invention apparaîtront à la lecture de la description détaillée ci-dessous faisant référence aux figures suivantes.
- la figure 1 illustre schématiquement la transition entre la couche désoxydée et le reste de la pièce selon l'invention, et
- les figures 2A et 2B représentent respectivement une coupe métallographique d'une pièce selon l'art antérieur et d'une pièce selon l'invention.

### Description de l'invention

L'invention concerne une poudre d'acier inoxydable austénitique et, plus spécifiquement, une poudre d'acier inoxydable austénitique comprenant de l'azote afin de réduire, voire de s'affranchir du nickel connu pour son caractère allergène. Selon l'invention, cette poudre d'acier inoxydable austénitique comporte une teneur spécifique en carbone choisie pour optimiser la réaction carbothermique en surface de la pièce lors du frittage de cette dernière. L'invention concerne également un procédé de fabrication par métallurgie des poudres de pièces mécaniques à fonction technique et/ou esthétique et, plus spécifiquement, d'un article décoratif. Plus particulièrement, la pièce mécanique peut être une pièce d'habillage en horlogerie choisie parmi la liste non exhaustive comprenant une carrure, un fond, une lunette, un poussoir, un maillon de bracelet, un bracelet, une boucle ardillon, un cadran, une aiguille, une couronne et un index de cadran. Il peut également s'agir d'une pièce de bijouterie ou de joaillerie.

La poudre d'acier inoxydable austénitique sans nickel selon l'invention comprend en poids :
- 10 < Cr < 25%,
- 5 < Mn < 20%,
- 1 < Mo < 5%,
- 0.05 ≤ C ≤ 0.11%,
- 0 ≤ Si < 2%,
- 0 ≤ Cu < 4%,
- 0 ≤ N < 1%,
- 0 ≤ O < 0.3%,
le solde étant constitué par le fer et des impuretés éventuelles. Par impuretés éventuelles, on entend des éléments n'ayant pas pour but de modifier la ou les propriétés de l'alliage mais dont la présence est inévitable car ils sont issus du procédé de fabrication de la poudre. Les impuretés éventuelles telles que le B, Mg, Al, P, S, Ca, Sc, Ti, V, Co, Ni, Zn, Se, Zr, Nb, Sn, Sb, Te, Hf, Ta, W, Pb et Bi peuvent notamment être chacune présentes dans une concentration massique inférieure ou égale à 0.5%. Au sens de la présente invention, on entend donc par acier inoxydable austénitique sans nickel un alliage ne contenant pas plus de 0.5% en pourcentage massique de nickel. Avantageusement, la poudre d'acier inoxydable austénitique sans nickel selon l'invention présente en outre un diamètre D90 inférieur ou égal à 150 µm.

Préférentiellement, la poudre d'acier inoxydable austénitique sans nickel selon l'invention comprend en poids :
- 15 < Cr < 20%,
- 8 < Mn < 14%,
- 2 < Mo < 4%,
- 0.05 ≤ C ≤ 0.11%,
- 0 ≤ Si < 1%,
- 0 ≤ Cu < 0.5%,
- 0 ≤ N < 1%,
- 0 ≤ O < 0.2%,
le solde étant constitué par le fer et les impuretés éventuelles telles que précitées.

Plus préférentiellement, la poudre d'acier inoxydable austénitique sans nickel selon l'invention comprend en poids :
- 16.5 ≤ Cr ≤ 17.5%,
- 10.5 ≤ Mn ≤ 11.5%,
- 3 ≤ Mo ≤ 3.5%,
- 0.05 ≤ C ≤ 0.11%,
- 0 ≤ Si ≤ 0.6%,
- 0 ≤ Cu ≤ 0.5%,
- 0 ≤ N < 1%,
- 0 ≤ O < 0.2%,
le solde étant constitué par le fer et les impuretés éventuelles telles que précitées.

Le procédé de fabrication de la pièce consiste à réaliser, au moyen de la poudre métallique précitée, une ébauche ayant sensiblement la forme de la pièce à fabriquer, puis à fritter cette ébauche. L'ébauche peut être réalisée par moulage par injection (*MIM pour Metal Injection Molding*), pressage, extrusion ou fabrication additive. Plus précisément, dans le cas du moulage par injection, l'ébauche peut être réalisée au moyen d'un mélange, aussi appelé feedstock, comprenant la poudre métallique et un système de liant organique (paraffine, polyéthylène, etc.). Ensuite, le feedstock est injecté et le liant est éliminé par dissolution dans un solvant et/ou par dégradation thermique.

L'ébauche est frittée dans une atmosphère comprenant un gaz porteur d'azote (N₂ par exemple) à une température comprise entre 1000 et 1500°C, de préférence à une température comprise entre 1100 et 1400°C, plus préférentiellement encore à une température comprise entre 1200 et 1300°C, pendant un temps compris entre 1 et 10 heures, de préférence pendant un temps compris entre 1 et 5 heures. Les caractéristiques du cycle de frittage, particulièrement la température et la pression partielle d'azote, dépendent notamment de la composition de l'alliage et sont fixées de façon à obtenir une structure totalement austénitique après frittage. On précisera que la teneur en azote de la pièce peut être ajustée en changeant la pression partielle en azote de l'atmosphère. En plus de l'azote, d'autres gaz peuvent être utilisés dans l'atmosphère de frittage, comme de l'hydrogène et de l'argon.

Le cycle de frittage peut être réalisé en une seule étape dans les gammes de températures et de temps précitées. Il est également envisageable de réaliser le cycle de frittage en deux étapes avec une première étape dans une gamme de températures comprises entre 1000 et 1200°C pendant un temps compris entre 30 minutes et 5 heures, suivie d'une seconde étape dans une gamme de températures comprises entre 1200 et 1500°C, de préférence entre 1200 et 1300°C, pendant un temps compris entre 1 et 10 heures. Ce premier palier permet d'optimiser la réduction carbothermique des oxydes de manganèse et/ou des oxydes mixtes de manganèse et de silicium et ainsi d'obtenir une couche désoxydée plus profonde.

Après frittage de la poudre d'acier inoxydable austénitique sans nickel selon l'invention, des traitements thermiques supplémentaires peuvent être réalisés sur les composants frittés comme, par exemple, un traitement de compression isostatique à chaud pour éliminer au maximum la porosité résiduelle.

Un traitement thermique supplémentaire peut également consister à éliminer la porosité résiduelle en surface de l'échantillon. Ainsi, conformément à la demande EP17202337.6, le traitement thermique supplémentaire peut consister à traiter la pièce frittée pour transformer la structure austénitique en une structure ferritique ou biphasée ferrite + austénite en surface de la pièce, et ensuite à transformer à nouveau la structure ferritique ou biphasée ferrite + austénite en une structure austénitique de manière à former en surface de la pièce une couche plus dense. Par ailleurs, après l'étape de frittage, la pièce peut être soumise à un traitement de finition par étampage, aussi qualifié de forgeage.

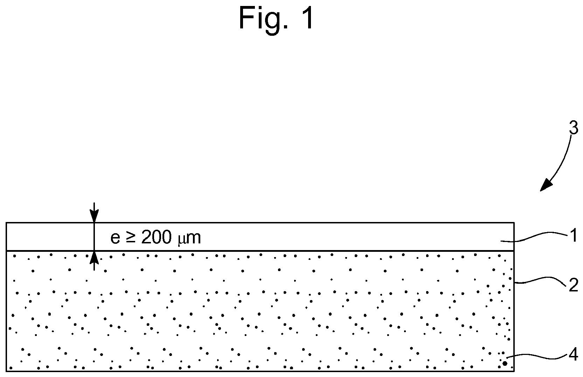

Les pièces obtenues avec la poudre d'acier inoxydable austénitique sans nickel selon l'invention présentent, après frittage, une couche superficielle désoxydée dont l'épaisseur est d'au moins 200 µm, cette épaisseur étant de préférence supérieure ou égale à 250 µm et, plus préférentiellement, supérieure ou égale à 300 µm. Dans cette couche désoxydée, le diamètre des oxydes qui sont de forme sensiblement circulaire est inférieur à 2 µm et la fraction surfacique ou volumique totale des oxydes est inférieure à 0.1%. La figure 1 illustre schématiquement la transition entre la couche désoxydée 1 d'épaisseur e et le reste 2 de la pièce 3 comportant des oxydes 4 de taille et de fraction surfacique supérieures. La ligne de démarcation entre la couche dite désoxydée et le reste de la pièce frittée et ainsi l'épaisseur de la couche désoxydée peut être aisément déterminée en microscopie optique à partir d'une ou de plusieurs coupes métallographiques. De même, la fraction surfacique ou volumique d'oxydes peut être déterminée par analyse d'images en microscopie optique de sections polies de la pièce. La fraction surfacique correspond au rapport entre la surface occupée par les oxydes et la surface totale de la couche désoxydée analysée. La fraction volumique peut être déduite de la fraction surfacique en supposant que les oxydes sont de forme circulaire. On précisera que cette transition entre la couche désoxydée et le reste de la pièce frittée ne peut être observée que si les pièces présentent au moins en surface une porosité quasi nulle, c'est-à-dire une densité relative supérieure ou égale à 99%. En effet, en présence d'une porosité importante, il sera difficile de différencier les oxydes des pores en microscopie optique.

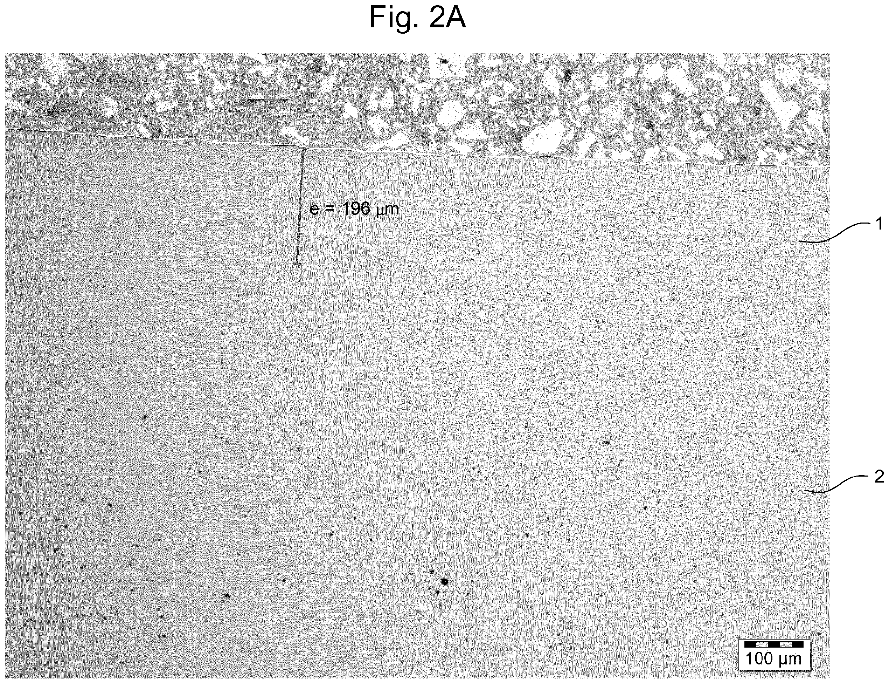

Pour illustrer l'effet du carbone sur la désoxydation des poudres d'aciers inoxydables austénitiques sans nickel, des pièces mises en forme par MIM (Metal Injection Molding) à partir de deux poudres (D90 = 16 µm) ayant des concentrations différentes en carbone ont été frittées en même temps dans le même four. Des coupes métallographiques ont été réalisées pour mesurer et comparer l'épaisseur de la couche désoxydée entre les deux pièces. Le frittage a été réalisé dans une atmosphère réductrice comprenant 75%N₂ et 25%H₂ sous une pression de 850 mbars avec un premier palier à 1200°C pendant 3 heures suivi d'un deuxième palier à 1300°C pendant 2 heures. Un échantillon comparatif a été réalisé au moyen d'une poudre comprenant 0.03% en poids de carbone. Plus précisément, il s'agit d'une poudre Fe-17Cr-11Mn-3Mo-0.5Si-0.1O-0.5N-0.03C (% en poids). Une vue en microscopie optique d'une coupe transversale de l'échantillon après polissage est représentée à la figure 2A. On observe nettement une ligne de transition entre la couche désoxydée 1 et le reste 2 de l'échantillon. L'épaisseur de la couche désoxydée est d'environ 196 µm. Des mesures réalisées sur plusieurs coupes ont montré que les valeurs sont sensiblement similaires d'une coupe à l'autre.

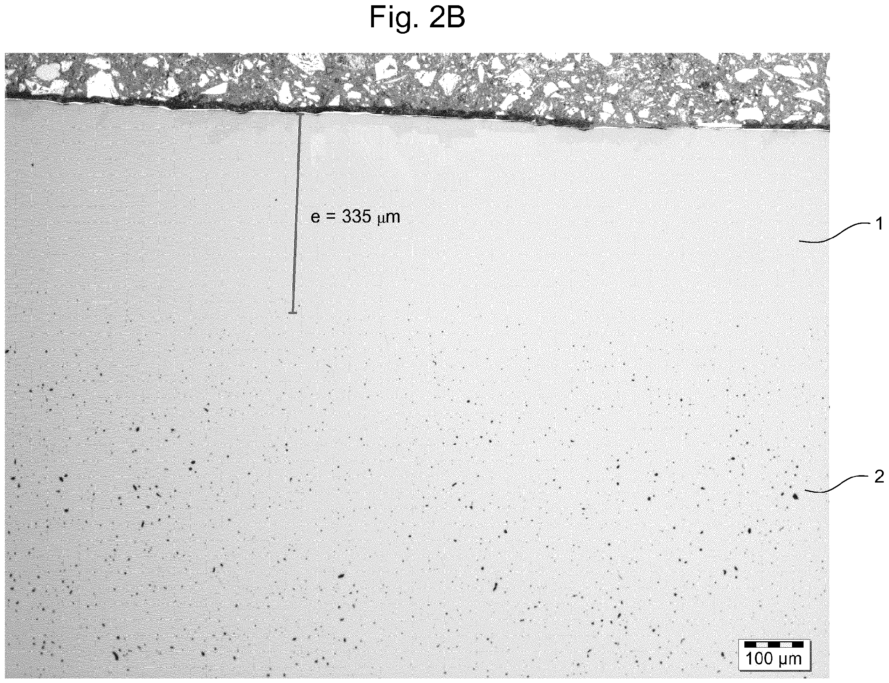

Un échantillon selon l'invention a été réalisé au moyen d'une poudre comprenant 0.07% en poids de carbone. Plus précisément, il s'agit d'une poudre Fe-17Cr-11Mn-3Mo-0.5Si-0.1O-0.5N-0.07C (% en poids). Une vue en microscopie optique d'une coupe transversale de l'échantillon après polissage est représentée à la figure 2B. On observe également nettement une ligne de transition entre la couche désoxydée 1 et le reste 2 de l'échantillon. L'épaisseur de la couche désoxydée est nettement supérieure, avec une valeur d'environ 335 µm.

Des essais ont également été réalisés avec une poudre comprenant 0.18% en poids de carbone, soit une poudre Fe-17Cr-11Mn-3Mo-0.5Si-0.1O-0.5N-0.18C (% en poids). La décarburation provenant de la réaction du carbone avec l'hydrogène de l'atmosphère a engendré des différences de concentration en carbone très importantes au sein d'une même charge, c.à.d. partant d'une même composition de poudre, avec pour conséquence des différences au niveau de la microstructure des pièces.

Il va de soi que la présente invention n'est pas limitée à la description qui précède et que diverses modifications et variantes simples peuvent être envisagées sans sortir du cadre de l'invention tel que défini par les revendications annexées. On aura compris de ce qui précède que la présente invention s'intéresse au frittage de pièces au moyen de poudres d'aciers austénitiques inoxydables sans nickel et que son but est de procurer de telles pièces qui présentent une couche superficielle aussi épaisse que possible dépourvue au maximum de ses oxydes. Néanmoins, de tels aciers comprennent des concentrations en manganèse élevées. Or, le manganèse est un composant présentant une forte affinité pour l'oxygène et les oxydes qu'il forme ne peuvent être éliminés qu'à des températures voisines des températures de frittage. Or, à la température de frittage, la porosité se ferme rapidement, ce qui rend plus difficile l'élimination des oxydes dans lesquels le manganèse est inclus. Face à ce problème, la Demanderesse a mis en évidence que des compositions d'aciers austénitiques inoxydables sans nickel renfermant une concentration en carbone au moins égale à 0.05% en poids et n'excédant pas 0.11% en poids permettaient d'obtenir des pièces frittées avec une couche superficielle présentant une plus faible concentration en oxydes et dont l'épaisseur est supérieure à ce qui a été observé sur des pièces frittées obtenues au moyen d'aciers austénitiques inoxydables sans nickel connus. On a en effet observé que pour des concentrations en carbone comprises entre 0.05% et 0.11% en poids, la présence du carbone permet de désoxyder plus en profondeur les pièces frittées tout en évitant une décarburation problématique, cette désoxydation étant encore renforcée par le fait qu'elle puisse être effectuée à des températures inférieures à la température de frittage pour lesquelles la densité est encore faible et les pores relativement ouverts.

## Revendications

1. Poudre d'acier inoxydable austénitique comprenant en poids :
- 10 < Cr< 25%,
- 5 < Mn < 20%,
- 1 < Mo < 5%,
- 0.05 ≤ C ≤ 0.11%,
- 0 ≤ Si < 2%,
- 0 ≤ Cu < 4%,
- 0 ≤ N < 1%,
- 0 ≤ O < 0.3%,
- 0 ≤ Ni ≤ 0.5%,
avec un solde constitué par du fer et des impuretés éventuelles ayant chacune une teneur comprise entre 0 et 0.5%.

2. Poudre selon la revendication 1, comprenant en poids :
- 15 < Cr < 20%,
- 8 < Mn < 14%,
- 2 < Mo < 4%,
- 0.05 ≤ C ≤ 0.11%,
- 0 ≤ Si < 1%,
- 0 ≤ Cu < 0.5%,
- 0 ≤ N < 1%,
- 0 ≤ O < 0.2%,
- 0 ≤ Ni ≤ 0.5%,
avec le solde constitué par le fer et les impuretés éventuelles ayant chacune une teneur comprise entre 0 et 0.5%.

3. Poudre selon la revendication 1 ou 2, comprenant en poids :
- 16.5 ≤ Cr ≤ 17.5%,
- 10.5 ≤ Mn ≤ 11.5%,
- 3 ≤ Mo ≤ 3.5%,
- 0.05 ≤ C ≤ 0.11%,
- 0 ≤ Si ≤ 0.6%,
- 0 ≤ Cu ≤ 0.5%,
- 0 ≤ N < 1%,
- 0 ≤ O < 0.2%,
- 0 ≤ Ni ≤ 0.5%,
avec le solde constitué par le fer et les impuretés éventuelles ayant chacune une teneur comprise entre 0 et 0.5%.

4. Poudre selon l'une quelconque des revendications précédentes, **caractérisée en ce que** les particules qui forment la poudre ont un diamètre D90 inférieur ou égal à 150 µm.

5. Pièce en acier inoxydable austénitique avec une teneur en nickel inférieure ou égale à 0.5% en poids, **caractérisée** en en ce qu'elle comprend du carbone dans une teneur supérieure ou égale à 0.05% et inférieure ou égale à 0.11% en poids et en ce qu'elle présente en surface une couche (1) dite désoxydée, ladite couche désoxydée (1) comportant des oxydes (4) selon une fraction surfacique moindre que celle du reste (2) de la pièce (3), le diamètre de ces oxydes (4) étant plus faible comparé au reste (2) de la pièce (3), ladite couche désoxydée (1) ayant une épaisseur supérieure ou égale à 200 µm.

6. Pièce selon la revendication 5, **caractérisée en ce que** la couche désoxydée (1) a une épaisseur supérieure ou égale à 250 µm.

7. Pièce selon la revendication 5 ou 6, **caractérisée en ce que** la couche désoxydée (1) a une épaisseur supérieure ou égale à 300 µm.

8. Pièce selon l'une quelconque des revendications 5 à 7, **caractérisée en ce que** la couche désoxydée (1) comporte des oxydes (4) ayant un diamètre inférieur ou égal à 2 µm avec une fraction surfacique inférieure ou égale à 0.1%.

9. Pièce selon l'une quelconque des revendications 5 à 8, **caractérisée en ce que** la couche désoxydée (1) a une densité relative supérieure ou égale à 99%.

10. Pièce selon l'une quelconque des revendications 5 à 9, **caractérisée en ce que** les oxydes (4) sont des oxydes de manganèse et/ou des oxydes mixtes de manganèse et de silicium.

11. Pièce selon l'une quelconque des revendications 5 à 10, **caractérisée en ce que** la pièce (3) est une pièce d'habillage en horlogerie ou une pièce de bijouterie ou de joaillerie.

12. Pièce selon la revendication 11, **caractérisée en ce que** la pièce d'habillage est choisie parmi la liste comprenant une carrure, un fond, une lunette, un poussoir, un maillon de bracelet, un bracelet, une boucle ardillon, un cadran, une aiguille, une couronne et un index de cadran.

13. Montre comprenant la pièce selon la revendication 12.

14. Procédé de fabrication d'une pièce en acier inoxydable austénitique comprenant les étapes suivantes de :
- mise à disposition d'une poudre selon l'une des revendications 1 à 4,
- élaboration d'une ébauche ayant sensiblement la forme de la pièce (3) à fabriquer au moyen, au moins, de ladite poudre,
- frittage de l'ébauche dans une atmosphère comprenant un gaz porteur en azote à une température comprise entre 1000 et 1500°C pendant un temps compris entre 1 et 10 heures pour induire la réaction carbothermique entre des oxydes et le carbone présents dans l'ébauche et pour densifier l'ébauche.

15. Procédé de fabrication selon la revendication 14, **caractérisé en ce que** le frittage se déroule en deux étapes avec une première étape entre 1000 et 1200°C pendant un temps compris entre 30 minutes et 5 heures, suivie d'une deuxième étape entre 1200 et 1500°C pendant un temps compris entre 1 et 10 heures.

16. Procédé selon la revendication 14 ou 15, **caractérisé en ce que** l'ébauche est réalisée par moulage par injection, extrusion, pressage ou fabrication additive.

17. Procédé selon l'une des revendications 14 à 16, **caractérisé en ce qu'**il comporte, après l'étape de frittage, une étape de forgeage.

18. Procédé selon l'une des revendications 14 à 16, **caractérisé en ce qu'**il comporte, après l'étape de frittage, une étape de compression isostatique à chaud.

19. Procédé selon l'une des revendications 14 à 18, **caractérisé en ce qu'**il comporte après l'étape de frittage, une étape de transformation en surface de l'acier inoxydable austénitique en une structure ferritique ou biphasée ferrite + austénite, et ensuite une étape de transformation en ladite surface de la structure ferritique ou biphasée ferrite + austénite en une structure austénitique, de manière à former en surface de la pièce (3) une couche dite densifiée présentant une densité supérieure par rapport au coeur de la pièce (3).
